# EUROPÄISCHE PATENTSCHRIFT

(11) **EP 0 588 761 B1**
(45) Veröffentlichungstag und Bekanntmachung des Hinweises auf die Patenterteilung: **22.11.1995**
(21) Anmeldenummer: 93810586.3
(22) Anmeldetag: 20.08.1993
(51) Int. Cl.: B60P 7/08

(54) **Vorrichtung zur Sicherung von Ladegut**
Device for securing of load
Dispositif pour la fixation de la charge

(30) Priorität: 17.09.1992 CH 2925/92
(43) Veröffentlichungstag der Anmeldung: 23.03.1994
(73) Patentinhaber: ALUSUISSE-LONZA SERVICES AG, 8034 Zürich (CH)
(72) Erfinder: Röllin, Ulrich, CH-8048 Zürich (CH); Cator, Robert, CH-5503 Schafhisheim (CH)

(56) Entgegenhaltungen:
- DE-A- 3 330 170
- DE-U- 8 316 921
- DE-U- 9 206 036
- GB-A- 2 167 354
- US-A- 3 831 976

## Beschreibung

Die Erfindung betrifft eine Vorrichtung zur Sicherung von Ladegut an der Seitenwand eines Laderaumes von Transportgeräten, mit einer an der Seitenwand verankerten Zurrschiene mit paarweise einander gegenüberliegenden Längsrinnen und in diesen lagernden, in Längsrichtung der Zurrschiene verschiebbaren Zurrhaken.

Beim Transport von Gütern in einem Laderaum von Transportgeräten aller Art wie Strassen- und Schienenfahrzeuge, Frachtcontainer, Schiffe und Flugzeuge wird das Transportgut aus Sicherheitsgründen gegen Verschiebung gesichert. Dies erfolgt meistens über in Seitenwände eingebaute Binderinge oder Zurrschienen. Diese Befestigungseinrichtungen sind entweder einzeln fest verankert oder beinhalten eine sogenannte Modulfixierung von beispielsweise 50 mm Abstand. Der Nachteil dieser ortsfesten Anbindemöglichkeiten liegt darin, dass sich die Zurreinrichtung je nach Grösse des Ladegutes oft nicht am gewünschten Ort befindet.

Aus der DE-U-8316921 ist eine Zurrschiene mit paarweise einander gegenüberliegenden Längsrinnen und in diesen lagernden, in Längsrichtung der Zurrschiene verschiebbaren Zurrhaken bekannt. Die Zurrhaken sind als Schnallen mit mehreren Stegen ausgebildet. Als nachteilig bei dieser vorbekannten Vorrichtung erweist sich, dass die Schnallen beim Zurren eine Schwergängigkeit bezüglich des selbsttätigen Verschiebens innerhalb der Zurrschiene zeigen, die ohne zusätzliche manuelle Verschiebung der Schnallen nicht ohne weiteres zu einer optimalen Stellung von Zurrband und Anbindeeinrichtung führt.

Angesichts dieser Gegebenheiten haben sich die Erfinder die Aufgabe gestellt, eine Vorrichtung der eingangs erwähnten Art zu schaffen, bei welcher sich während des Zurrens eine optimale gegenseitige Stellung von Zurrband und Zurrhaken selbsttätig einstellt.

Erfindungsgemäss wird die Aufgabe dadurch gelöst, dass die Zurrhaken eine Drehachse bildende und um diese drehbare Lagerzapfen aufweisen.

Die Zurrschiene weist somit integrierte Zurrhaken auf, die je nach Bedarf in der entsprechenden Anzahl in die Zurrschiene eingesetzt und darin in die gewünschte Zurrposition verschoben werden. Beim Zurren pendeln sich die Zurrhaken mit zunehmender Zugkraft in ihre optimale Position ein und werden gleichzeitig fixiert.

Zweckmässigerweise sind innerhalb der Längsrinnen paarweise einander gegenüberstehende, eine hinterschnittene Längsnut bildende Längsstege angeformt. Die Zurrhaken weisen hierbei im Bereich der Lagerzapfen eine für den Eingriff der Längsstege vorgesehene Ringnut als Führungshilfe auf.

Die Zurrhaken weisen vorzugsweise einen ausserhalb der Drehachse der Lagerzapfen liegenden Mittelteil auf, wobei bei einer besonders vorteilhaften Ausführungsform an den Lagerzapfen diametral einander gegenüberliegende, unter Zugbelastung der Zurrhaken als Anschlag innerhalb der Längsrinnen dienende Nocken vorgesehen sind. Nach erfolgtem Einpendeln der Zurrhaken beim Zurren wird die Fixierung durch die Nocken noch erheblich verstärkt.

Bei einer vorteilhaften Ausführungsform sind die Längsrinnen von einem von einem Grundprofilstreifen abragenden und in einem Abstand zu diesem in einen abgewinkelten Frontprofilstreifen übergehenden Bodenprofilstreifen gebildet. Hierbei kann der Grundprofilstreifen der Seitenwand aufliegen oder der Grundprofilstreifen und die Bodenprofilstreifen können in einen entsprechend angepassten Ausschnitt in der Seitenwand versenkt angeordnet sein.

Die Zurrschiene kann mehrere Paare von Längsrinnen aufweisen und insbesondere in Metall oder Kunststoff ausgeführt sein.

Zum Einsetzen der Zurrhaken in die Zurrschiene von deren Frontseite her können die Längsrinnen jeweils wenigstens eine mit einer Zapfensicherung verschliessbare Ausnehmung aufweisen.

Die Zurrhaken sind selbstverständlich so dimensioniert, dass bei einer allfälligen Ueberbelastung der Zurrhaken reisst und nicht die Längsrinnen bzw. die Seitenwand des Laderaumes beschädigt wird. Vorzugsweise weisen die Zurrhaken in deren Mittelteil eine umlaufende Rille als sichtbare Sollbruchstelle auf.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf eine Seitenwand mit aufgesetzter Zurrschiene;
- Fig. 2:: eine Schrägsicht auf eine Seitenwand mit versenkter Zurrschiene;
- Fig. 3:: eine Schrägsicht auf einen Zurrhaken;
- Fig. 4:: eine Schrägsicht auf eine Seitenwand mit aufgesetzter Zurrschiene;

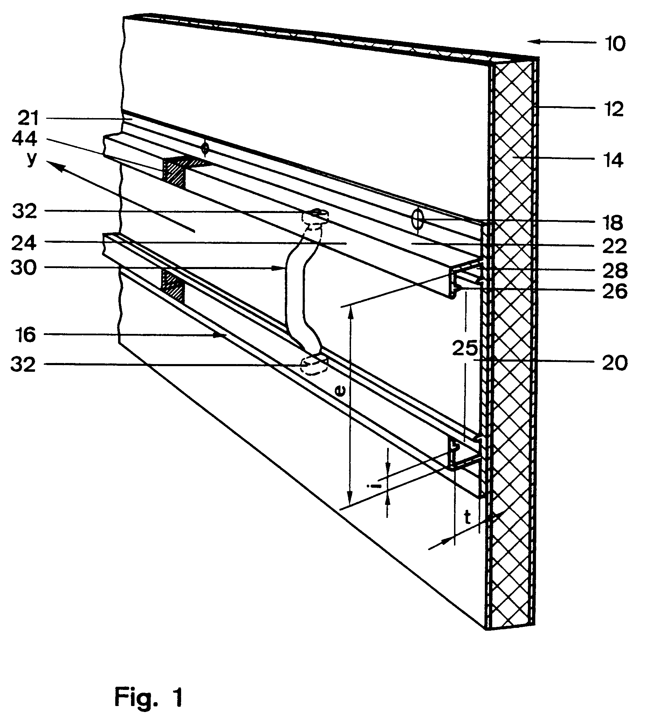

Eine Seitenwand 10 eines --in der Zeichnung nicht näher dargestellten--Laderaumes eines Nutzfahrzeuges ist als sogenannte Sandwichplatte mit metallischen Deckblechen 12 und zwischenliegendem Kunststoffkern 14 konzipiert. Auf die Seitenwand 10 ist gemäss Fig. 1 eine in horizontaler Richtung y verlaufende Zurrschiene 16 aufgesetzt und mittels Schrauben oder Nieten 18 verankert. Die Zurrschiene 16 kann mit der Seitenwand 10 auch verklebt sein.

Die beispielsweise aus Aluminium stranggepresste Zurrschiene 16 weist einen der Seitenwand 10 aufliegenden Grundprofilstreifen 20 auf, von welchem in einem Abstand e zueinander zwei Bodenprofilstreifen 22 horizontal abragen und in einem Abstand t zum Grundprofilstreifen 20 in rechtwinklig zu den Bodenprofilstreifen 22 und parallel zum Grundprofilstreifen 20 liegende, zueinander gerichtete Frontprofilstreifen 24 übergehen, wodurch zwei querschnittlich U-förmige Längsrinnen 25 gebildet werden, deren Oeffnungen einander gegenüberstehen. Der Grundprofilstreifen 20 ist als Seitenprofilstreifen 21 über die Bodenprofilstreifen 22 hinaus verlängert.

In einem Abstand i vom Bodenprofilstreifen 22 sind an den Frontprofilstreifen 24 sowie am Grundprofilstreifen 20 gegeneinander gerichtete, horizontal verlaufende und innerhalb der U-förmigen Längsrinne 25 eine hinterschnittene Längsnut 28 bildende Längsstege 26 angeformt.

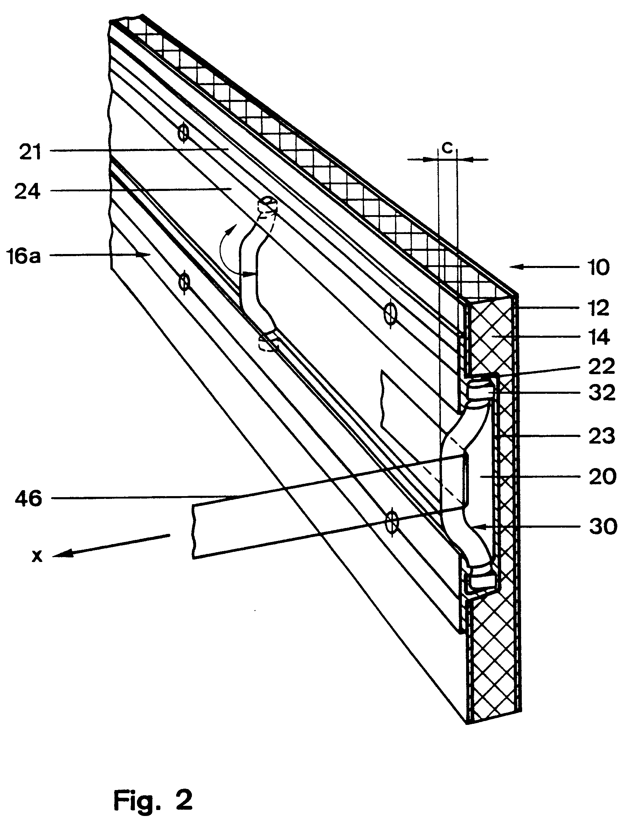

Bei der in Fig. 2 dargestellten Ausführungsform ist die Zurrschiene 16a in der Seitenwand 10 versenkt angeordnet. Hierbei liegen nur die Seitenprofilstreifen 21 der Seitenwand 10 auf und die Frontprofilstreifen 24 liegen in der selben Ebene wie die Seitenprofilstreifen 21. Die Bodenprofilstreifen 22 ragen gegen das Innere der Seitenwand 10 ab und sind mit dem Grundprofilstreifen 20 in einen querschnittlich C-förmigen Ausschnitt 23 in der Seitenwand 10 eingepasst.

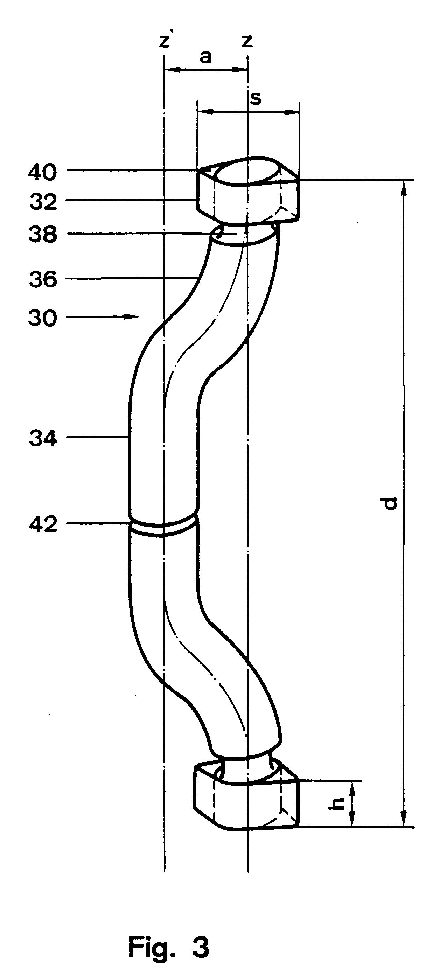

Ein Zurrhaken 30 weist gemäss Fig. 3 in einer gemeinsamen Drehachse z liegende, endständige Lagerzapfen 32 einer Höhe h auf, die über S-förmige Teile 36 in einen Mittelteil 34 übergehen, welcher in einer zur Drehachse z parallelen und zu dieser in Abstand gehaltenen Achse z' liegt. Der einen kreisförmigen Querschnitt aufweisende Zurrhaken 30 ist beim Uebergang vom Lagerzapfen 32 in den S-förmigen Teil 36 mit einer Ringnut 38 versehen. Der Lagerzapfen 32 weist diametral einander gegenüberliegende Nocken 40 auf, wobei die Nockendiagonale in der durch die Achsen z, z' definierten Ebene liegt und ein Mass s aufweist. Im Mittelteil 34 ist eine umlaufende Rille 42 als sichtbare Sollbruchstelle vorgesehen.

Das Einsetzen der Zurrhaken 30 in die Zurrschiene 16, 16a und deren Gebrauchsweise ist aus Fig. 1 und 2 ersichtlich. Die Lagerzapfen 32 der Zurrhaken 30 werden stirnseitig oder über mit Zapfensicherungen verschliessbare Ausnehmungen 44 in die hinterschnittenen Längsnuten 28 der Zurrschiene 16, 16a eingeführt, wobei die Längsstege 26 in die Ringnut 38 eingreifen. Die Zurrhaken 30 sind auf diese Weise in der Zurrschiene 16, 16a verschiebbar gelagert und können somit an jeder beliebigen Stelle positioniert werden. Unter Berücksichtigung eines Spiels entspricht hierbei der gegenseitige Abstand e der Bodenprofilstreifen 22 der Gesamtlänge d der Zurrhaken 30 und der Abstand i zwischen Bodenprofilstreifen 22 und Längsstegen 26 der Höhe a der Lagerzapfen 32. Das Mass s der Nockendiagonale ist etwas grösser als der Abstand t zwischen Frontprofilstreifen 24 und Grundprofilstreifen 20.

Zur Sicherung von Ladegut an der Seitenwand 10 mittels Zurrbändern wird --wie in Fig. 2 angedeutet-- der vom Zurrband 46 hintergriffene Mittelteil 36 des Zurrhakens 30 während des Zurrens in Zurrichtung x aus der Zurrschiene 16 herausgedreht und steht maximal um ein Mass c gegenüber der von den Frontprofilstreifen 24 gebildeten Ebene vor. Beim Zurren pendelt sich der Zurrhaken 30 mit Erhöhung der Zugkraft in seiner Idealposition ein und wird in dieser fixiert. Die Fixierung erfolgt hierbei durch den Reibschluss zwischen den Lagerzapfen 32 und der Innenseite der Frontprofilstreifen 24 und wird aufgrund des Uebermasses der Nockendiagonale s gegenüber dem Abstand t zwischen dem Frontprofilstreifen 24 und dem Grundprofilstreifen 20 innerhalb der hinterschnittenen Längsnut 28 noch erheblich verstärkt. Werden die Zurrbänder 46 wieder gelöst, so kann das Ladegut ohne Beschädigung durch vorstehende Zurrhaken 30 der Seitenwand 10 entlang verschoben werden, da während dieses Verschiebevorgangs die Zurrhaken 30 in die Zurrschiene 16 zurückgedreht und versenkt werden.

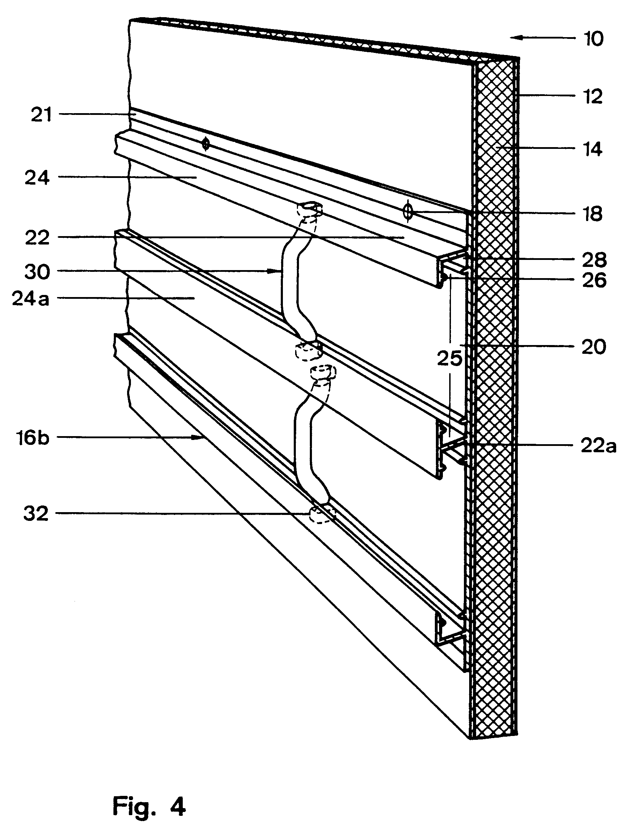

Fig. 4 zeigt eine doppelte Zurrschiene 16b. Diese weist grundsätzlich den gleichen Aufbau auf wie die in Fig. 1 dargestellte Zurrschiene 16. Vom mittleren, den unmittelbar benachbarten hinterschnittenen Längsnuten 28 gemeinsamen Bodenprofilstreifen 22a ragt der Frontprofilstreifen 24a nach beiden Richtungen ab.

## Patentansprüche

1. Vorrichtung zur Sicherung von Ladegut an der Seitenwand (10) eines Laderaumes von Transportgeräten, mit einer an der Seitenwand (10) verankerten Zurrschiene (16,16a,16b) mit paarweise einander gegenüberliegenden Längsrinnen (25) und in diesen lagernden, in Längsrichtung (y) der Zurrschiene verschiebbaren Zurrhaken (30),
dadurch gekennzeichnet,
dass die Zurrhaken (30) eine Drehachse (z) bildende und um diese drehbare Lagerzapfen (32) aufweisen.

2. Vorrichtung nach Anspruch 1, dadurch gekennzeichnet, dass innerhalb der Längsrinnen (25) paarweise einander gegenüberstehende, eine hinterschnittene Längsnut (28) bildende Längsstege (26) angeformt sind und die Zurrhaken (30) im Bereich der Lagerzapfen (32) eine für den Eingriff der Längsstege (26) vorgesehene Ringnut (38) als Führungshilfe aufweisen.

3. Vorrichtung nach Anspruch 1 oder 2, dadurch gekennzeichnet, dass die Zurrhaken (30) einen ausserhalb der Drehachse (z) der Lagerzapfen (32) liegenden Mittelteil (34) aufweisen.

4. Vorrichtung nach Anspruch 3, dadurch gekennzeichnet, dass die Lagerzapfen (32) diametral einander gegenüberliegende, unter Zugbelastung der Zurrhaken (30) als Anschlag innerhalb der Längsrinnen (25) dienende Nocken (40) aufweisen.

5. Vorrichtung nach einem der Ansprüche 1 bis 4, dadurch gekennzeichnet, dass die Längsrinnen (25) von einem von einem Grundprofilstreifen (20) abragenden und in einem Abstand (t) zu diesem in einen abgewinkelten Frontprofilstreifen (24) übergehenden Bodenprofilstreifen (22) gebildet sind.

6. Vorrichtung nach Anspruch 5, dadurch gekennzeichnet, dass der Grundprofilstreifen (20) der Zurrschiene (16) der Seitenwand (10) aufliegt.

7. Vorrichtung nach Anspruch 5, dadurch gekennzeichnet, dass der Grundprofilstreifen (20) und die Bodenprofilstreifen (22) der Zurrschiene (16a,16b) in einen entsprechend angepassten Ausschnitt (23) in der Seitenwand (10) versenkt angeordnet sind.

8. Vorrichtung nach einem der Ansprüche 1 bis 7, dadurch gekennzeichnet, dass die Zurrschiene (16b) mehrere Paare von Längsrinnen (25) aufweist.

9. Vorrichtung nach einem der Ansprüche 1 bis 8, dadurch gekennzeichnet, dass die Längsrinnen (25) jeweils wenigstens eine mit einer Zapfensicherung verschliessbare Ausnehmung (44) zum Einsetzen der Zurrhaken (30) in die Zurrschiene (16,16a,16b) aufweisen.

10. Vorrichtung nach einem der Ansprüche 1 bis 9, dadurch gekennzeichnet, dass die Zurrhaken (30) in deren Mittelteil (34) eine umlaufende Rille (42) als Sollbruchstelle aufweisen.

## Claims

1. Device for securing a load to the side wall (10) of the cargo space of transport vehicles, comprising a lashing rail (16, 16a, 16b) anchored to the side wall (10) with a pair of opposing longitudinal grooves (25) and lashing hooks (30) mounted therein to slide in the longitudinal direction (y) of the lashing rail, characterised in that the lashing hooks (30) have trunnions (32) which form an axis of rotation (z) and can pivot about it.

2. Device according to claim 1, characterised in that a pair of opposing longitudinal webs (26) forming an undercut longitudinal slot (28) are integrally moulded within the longitudinal grooves (25) and the lashing hooks (30) have an annular slot (38) provided for the engagement of the longitudinal webs (26) as a guide in the region of the trunnions (32).

3. Device according to claim 1 or claim 2, characterised in that the lashing hooks (30) have a central part (34) situated outside the axis of rotation (z) of the trunnions (32).

4. Device according to claim 3, characterised in that the trunnions (32) have diametrically opposing cams (40) serving as stops within the longitudinal grooves (25) when a tensile load is applied to the lashing hooks (30).

5. Device according to one of claims 1 to 4, characterized in that the longitudinal grooves (25) are formed by a bottom profiled strip (22) projecting from a main profiled strip (20) and passing over into an angled front profiled strip (24) at a distance (t) therefrom.

6. Device according to claim 5, characterized in that the main profiled strip (20) of the lashing rail (16) bears against the side wall (10).

7. Device according to claim 5, characterized in that the main profiled strip (20) and the bottom profiled strip (22) of the lashing rail (16a, 16b) are countersunk in a corresponding notch (23) in the side wall (10).

8. Device according to one of claims 1 to 7, characterised in that the lashing rail (16b) has several pairs of longitudinal grooves (25).

9. Device according to one of claims 1 to 8, characterized in that the longitudinal grooves (25) each have at least one recess (44) for inserting the lashing hooks (30) into the lashing rail (16, 16a, 16b) which can be closed by a locking pin.

10. Device according to one of claims 1 to 9, characterized in that the lashing hooks (30) have a circumferential rib (42) as a predetermined breaking point in their central part (34).

## Revendications

1. Dispositif pour fixer une charge sur la paroi latérale (10) d'un compartiment à marchandises d'appareils de transport, comportant un rail d'amarrage (16, 16a, 16b) ancré sur la paroi latérale (10) et muni de rigoles longitudinales (25) qui se font face à la manière d'une paire et de crochets d'amarrage (30) logés dans celles-ci et déplaçables dans la direction longitudinale (y) du rail d'amarrage, caractérisé en ce que les crochets d'amarrage (30) présentent des tourillons (32) formant un axe de rotation (z) et pouvant tourner autour de celui-ci.

2. Dispositif selon la revendication 1, caractérisé en ce que des nervures longitudinales (26) qui se font face à la manière d'une paire et qui forment une rainure longitudinale contre-dépouillée (28) sont venues de moulage à l'intérieur des rigoles longitudinales (25) et les crochets d'amarrage (30) comportent comme auxiliaire de guidage, dans le domaine des tourillons (32), une rainure annulaire (38) prévue pour l'engrènement des nervures longitudinales (26).

3. Dispositif selon la revendication 1 ou 2, caractérisé en ce que les crochets d'amarrage (30) présentent une partie médiane (34) située à l'extérieur de l'axe de rotation (z) des tourillons (32).

4. Dispositif selon la revendication 3, caractérisé en ce que les tourillons (32) comportent des saillies (40) diamétralement opposées qui servent de butée à l'intérieur des rigoles longitudinales (25) sous la sollicitation de traction des crochets d'amarrage (30).

5. Dispositif selon l'une des revendications 1 à 4, caractérisé en ce que les rigoles longitudinales (25) sont formées par une bande profilée de fond (22) qui fait saillie d'une bande profilée de base (20) et qui, à une distance (t) de celle-ci, se prolonge par une bande profilée frontale (24) pliée.

6. Dispositif selon la revendication 5, caractérisé en ce que la bande profilée de base (20) du rail d'amarrage (16) est appliquée sur la paroi latérale (10).

7. Dispositif selon la revendication 5, caractérisé en ce que la bande profilée de base (20) et les bandes profilées de fond (22) du rail d'amarrage (16a, 16b) sont disposées à l'état enfoncé dans une découpure (23) adaptée de manière correspondante dans la paroi latérale (10).

8. Dispositif selon l'une des revendications 1 à 7, caractérisé en ce que le rail d'amarrage (16b) comporte plusieurs paires de rigoles longitudinales (25).

9. Dispositif selon l'une des revendications 1 à 8, caractérisé en ce que les rigoles longitudinales (25) comportent chacune au moins un évidement (44) obturable par une fixation à tenons pour l'insertion des crochets d'amarrage (30) dans le rail d'amarrage (16, 16a, 16b).

10. Dispositif selon l'une des revendications 1 à 9, caractérisé en ce que les crochets d'amarrage (30) comportent dans leur partie médiane (34) une rainure périphérique (42) en tant que point destiné à la rupture.
